# FASCICULE DE BREVET EUROPEEN

(11) **EP 2 049 907 B1**
(45) Date de publication et mention de la délivrance du brevet: **14.09.2011**
(21) Numéro de dépôt: 07823350.9
(22) Date de dépôt: 26.07.2007
(51) Int. Cl.: G01N 35/10, G01N 1/00

(54) **DISPOSITIF ET PROCÉDÉ DE PRÉLÈVEMENT UTILISABLE DANS UN AUTOMATE D'ANALYSE**
PROBENENTNAHMEVORRICHTUNG UND VERFAHREN FÜR EIN AUTOMATISIERTES ANALYSEGERÄT
SAMPLING DEVICE AND METHOD USABLE IN AN ANALYSIS AUTOMATED DEVICE

(30) Priorité: 26.07.2006 FR 0606844
(43) Date de publication de la demande: 22.04.2009
(73) Titulaire: C2 DIAGNOSTICS, 34099 Montpellier (FR)
(72) Inventeur: CHAMPSEIX, Henri, F-34980 Saint Gely du Fesc (FR); CHAMPSEIX, Serge, F-19170 Tarnac (FR); MILHAT, Jean-Pierre, F-34280 Carnon (FR)
(74) Mandataire: Pontet, Bernard
(86) Numéro de dépôt international: PCT/FR2007/001293
(87) Numéro de publication internationale: WO 2008/012445

(56) Documents cités:
- WO-A-97/14967
- FR-A1- 2 767 583
- US-B1- 6 274 087
- US-B1- 6 360 794

## Description

La présente invention concerne.un dispositif de prélèvement utilisable dans un automate d'analyse. Elle vise également un procédé de prélèvement et/ou d'échantillonnage mettant en oeuvre un dispositif selon l'invention.

Le domaine de l'invention est le domaine des automates de prélèvement et/ou d'injection et plus particulièrement des automates d'analyse.

D'une manière générale, les tubes comprenant les produits à analyser utilisés dans les automates d'analyse sont des tubes comportant un bouchon généralement en élastomère. De plus en plus fréquemment, ces tubes sont mis sous vide relatif pour faciliter les opérations de remplissage de ces tubes. Par exemple, lors des opérations de prise de sang, on emploie des tubes dans lesquels un vide relatif est créé pour éviter l'utilisation d'une seringue. Dans les automates d'analyse, les opérations d'échantillonnage et d'injection sont effectuées par passage au travers du bouchon au moyen d'une aiguille adaptée, sans enlever le bouchon de ces tubes. Or, les différences de pression existant entre l'intérieur et l'extérieur du tube posent des difficultés lors d'un prélèvement du produit contenu dans ces tubes. De plus, lors du passage de l'aiguille au travers du bouchon, les déformations du bouchon et la pénétration de l'aiguille dans le tube augmentent les fluctuations de la pression dans ces tubes.

Toutes ces variations de pression peuvent réduire la précision des quantités prélevées ou injectées dans ces tubes..Les systèmes et dispositifs actuels préconisent l'utilisation d'aiguilles particulières pour essayer de résoudre ces problèmes. Ainsi, le brevet FR 2 767 583 propose l'utilisation d'une aiguille comportant, d'une part une pointe tranchante et, d'autre part une gorge ou une cannelure ou une rainure sur sa surface extérieure permettant la mise à la pression atmosphérique de l'intérieur du tube par circulation d'air entre l'extérieur et l'intérieur du tube grâce à la rainure.

Cependant une telle aiguille pose plusieurs problèmes. D'une part, la présence d'une rainure sur sa surface extérieure présente des risques de fuite du produit manipulé lors d'une opération de prélèvement. D'autre part, la pointe tranchante de l'aiguille présente des dangers de piqûre pour les opérateurs qui sont amenés à la manipuler.

De plus, les automates de prélèvement présentent des circuits d'amenée de produits diluants utilisés lors de l'analyse d'un échantillon prélevé ou de produits destinés à nettoyer l'aiguille. De telles opérations de nettoyage sont fréquentes et présentent une importante capitale pour ne pas contaminer les produits à analyser entre eux ou avec des produits d'analyse. Or, l'utilisation d'une aiguille présentant une rainure sur sa surface extérieure, telle que celle décrite dans le brevet FR 2 767 583, pose des problèmes de fuite au travers de cette gorge, d'une part du produit diluant et, d'autre part du produit destiné au nettoyage de l'aiguille. Les documents WO 97/14967, US 6 274 087 et US 6 360 794 décrivent d'autres dispositifs de prélèvement représentatifs de l'état de la technique.

Un autre objectif de l'invention est de proposer un dispositif de prélèvement permettant de pallier aux problèmes de fuite décrits ci-dessus tout en résolvant les problèmes de mise à la pression atmosphérique de l'intérieur du tube.

Un objectif de l'invention est de proposer un dispositif de prélèvement et/ou d'injection présentant moins de danger de piqûre pour l'opérateur que les dispositifs actuels.

L'invention propose de remédier aux problèmes précités par un dispositif de prélèvement utilisable dans un automate d'analyse, ce dispositif comprenant :
- un corps,
- une aiguille de prélèvement mobile dans le corps entre une position étendue adaptée au prélèvement d'un échantillon et une position rétractée, l'aiguille comprenant une extrémité de prélèvement et au moins une rainure s'étendant longitudinalement sur sa surface extérieure, et
- des moyens d'étanchéité entre le corps et ladite surface extérieure de l'aiguille ;
la rainure s'étendant entre les moyens d'étanchéité et l'extrémité de prélèvement quelle que soit la position de l'aiguille entre sa position étendue et sa position rétractée.

Par l'utilisation combinée d'au moins une rainure sur la surface extérieure d'une aiguille et de moyens d'étanchéité, le dispositif selon l'invention permet avantageusement d'apporter des solutions :
- d'une part aux problèmes de précision sur les quantités prélevées ou injectées par l'aiguille, en réalisant une mise à la pression atmosphérique du volume intérieur du tube dans lequel le prélèvement (et/ou l'injection) est (sont) réalisé(s) ; et
- d'autre part aux problèmes de fuite de produit de dilution ou de produits de nettoyage par la rainure.

Dans un mode particulier de réalisation du dispositif selon l'invention, l'aiguille peut comprendre au moins une deuxième rainure disposée de sorte que dans la position rétractée les moyens d'étanchéité sont disposés entre la première et la deuxième rainure, lesdites première et deuxième rainures définissant chacune une zone rainurée respective et une zone d'étanchéité entre elles.

En effet, pour s'assurer qu'un prélèvement sera bien effectué dans le tube même lorsqu'il contient peu de produit, l'aiguille est amenée jusqu'à proximité du fond du tube. Ainsi, il se peut que la première rainure ait pénétré dans le tube au-delà du bouchon, n'assurant plus la circulation d'air. Ceci n'est généralement pas gênant car les volumes prélevés sont faibles. Cependant, si l'on veut prélever une quantité plus importante, la deuxième zone rainurée, prévue pour traverser le bouchon dans la position étendue permet alors de rétablir la circulation de l'air.

Bien sûr, l'aiguille peut comprendre plusieurs zones rainurées séparées entre elles par une zone d'étanchéité respective.

Avantageusement, le dispositif selon l'invention peut comprendre plusieurs rainures sur sa surface extérieure, le nombre de rainures pouvant être déterminé selon l'utilisation recherchée.

Les dimensions de la rainure, et plus particulièrement la longueur et la profondeur de la rainure doivent être telles que lors du percement du bouchon, la déformation de ce dernier n'obture pas la rainure et ainsi n'empêche pas la mise à la pression atmosphérique du volume intérieur du tube.

Dans un mode de réalisation particulier, la rainure peut présenter une section rectangulaire, triangulaire, arrondie ou trapézoïdale ou encore en queue d'aronde, chacune de ces sections ayant des effets techniques particuliers. Par exemple, une section arrondie facilite le nettoyage de l'aiguille et plus particulièrement des rainures, alors qu'une section carrée ou rectangulaire ou encore trapézoïdale permet une mise à la pression atmosphérique plus efficace. De plus, chacune des sections présente des difficultés de réalisation plus ou moins élevées.

Les moyens d'étanchéité sont placés dans un volume intérieur du corps du dispositif selon l'invention. Ils permettent en quelque sorte de diviser le volume intérieur du corps en deux parties :
- une partie, dite aval, correspondant à la partie du volume intérieur située au-delà des moyens d'étanchéité en direction de l'extrémité de prélèvement de l'aiguille et,
- une partie dite amont, correspondant au reste du volume intérieur du corps.

Les moyens d'étanchéité ont pour fonction de réaliser l'étanchéité entre la partie aval et la partie amont. Ils sont agencés de manière à être en contact, d'une part avec la surface extérieure de l'aiguille et, d'autre part avec une surface intérieure du corps du dispositif. Le contact entre les moyens d'étanchéité et l'aiguille est ajusté de manière à ce que l'aiguille puisse y coulisser.

Avantageusement, les moyens d'étanchéité peuvent comprendre au moins un joint torique.

Avantageusement, les moyens d'étanchéité peuvent prendre appui sur au moins un épaulement du corps. Les moyens d'étanchéité peuvent aussi être montés, serrés ou non, entre deux épaulements ou dans une gorge, ou des formes qui font saillie dans le volume intérieur du corps du dispositif.

Avantageusement, le dispositif selon l'invention peut en outre comprendre des moyens d'amenée et/ou des moyens d'évacuation d'un liquide déterminé dans le volume aval du corps du dispositif selon l'invention. Ces moyens peuvent comprendre au moins un circuit d'amenée et un circuit d'évacuation du liquide déterminé. Dans une version particulière du dispositif selon l'invention le circuit d'amenée et le circuit d'évacuation peuvent avoir des parties communes. Les moyens d'amenée et/ou d'évacuation peuvent en outre comprendre des moyens de poussée ou d'aspiration d'un liquide dans les circuits d'amenée et/ou d'évacuation, telle que des pompes, des vannes. Ces moyens peuvent en outre comprendre des moyens d'obturation des circuits d'amenée et/ou d'évacuation quand ces circuits ne sont pas utilisés.

Dans une version particulière du dispositif selon l'invention, le liquide amené peut comprendre un liquide sous pression.

Dans une autre version particulière du dispositif selon l'invention, le liquide amené et/ou évacué peut comprendre un produit nettoyant et/ou un produit de rinçage de l'aiguille. Dans cette configuration particulière, le dispositif selon l'invention peut être placé au dessus d'un bac de nettoyage prévu pour récupérer une partie du produit lors d'une opération de rinçage et/ou de nettoyage. Dans cette configuration, préférentiellement, l'aiguille se trouve dans une position rétractée de manière à ce que le produit de nettoyage et/ou rinçage entre directement en contact avec la partie aval de l'aiguille à nettoyer et/ou rincer.

Selon une autre version particulière du dispositif selon l'invention, le liquide peut comprendre un produit de dilution, destiné à être ajouté à un réceptacle comprenant un échantillon prélevé dans un tube en vue de le soumettre à différentes analyses.

Le liquide peut aussi comprendre un réactif de test destiné potentiellement à entrer en réaction avec l'échantillon prélevé dans le cadre d'une analyse.

D'une manière avantageuse, du coté de l'extrémité de prélèvement de l'aiguille, la rainure se termine à distance de ladite extrémité. Cette distance peut être fonction de la forme de l'extrémité de prélèvement, ainsi que des dimensions de l'extrémité et de manière à ce que l'extrémité de prélèvement soit assez résistante pour passer au travers du bouchon du tube contenant le produit à analyser sans s'abîmer. La contrainte exercée sur l'aiguille lors du percement du bouchon ne doit pas abîmer l'aiguille.

Dans une version particulière du dispositif selon l'invention, l'extrémité de prélèvement de l'aiguille peut être arrondie. Une telle extrémité arrondie permet de réduire les risques de piqûre d'un opérateur avec l'aiguille lorsqu'il est amené à la manipuler.

Cependant, dans une autre version particulière du dispositif selon l'invention l'extrémité de l'aiguille peut être pointue, et plus particulièrement, l'aiguille peut présenter une extrémité de prélèvement avec une arête tranchante, cette arête tranchante étant reliée au corps sensiblement cylindrique de l'aiguille par au moins un ou plusieurs plans, au moins un de ces plans présentant un orifice de prélèvement.

Avantageusement, l'extrémité de prélèvement de l'aiguille peut comporter au moins un orifice, débouchant latéralement à la surface de l'aiguille. Un tel orifice permet, d'une part d'éviter de découper une pièce dans le bouchon d'un tube lors de la perforation de ce bouchon, et d'autre part d'obturer l'aiguille avec cette pièce découpée dans ce bouchon, ce qui est le cas dans la plupart des aiguilles de l'art antérieur comportant un orifice au niveau de l'extrémité de l'aiguille. De plus, un tel orifice permet une plus grande précision sur la quantité du produit prélevé par le dispositif selon l'invention.

Il apparaît de façon surprenante que les rainures de l'aiguille améliorent les performances de nettoyage de cette aiguille.

Suivant un autre aspect de l'invention, il est proposé un procédé mettant en oeuvre le dispositif selon l'invention.

D'autres avantages et caractéristiques apparaîtront à l'examen de la description détaillée d'un mode de réalisation nullement limitatif, et des dessins annexés sur lesquels :
- la figure 1 est une représentation schématique en coupe d'un dispositif selon l'invention, l'aiguille de prélèvement du dispositif étant dans une position rétractée ;
- la figure 2A est une représentation schématique en coupe d'un dispositif selon l'invention, l'aiguille de prélèvement du dispositif étant dans une position étendue ;
- la figure 2B est une représentation schématique en coupe d'un dispositif selon l'invention, l'aiguille de prélèvement du dispositif comportant deux zones rainurées et étant dans une position étendue ;
- la figure 3 est une représentation schématique en coupe de quatre aiguilles, comportant des rainures de sections différentes, utilisables dans le dispositif selon l'invention ;
- la figure 4 est une représentation schématique en coupe de quatre aiguilles, comportant chacune un nombre différent de rainures, utilisables dans le dispositif selon l'invention ;
- la figure 5 est une représentation schématique en coupe de trois aiguilles, comportant chacune une extrémité de prélèvement de forme différente.

L'exemple décrit ci-dessus est une application particulière, non limitative, d'un dispositif selon l'invention.

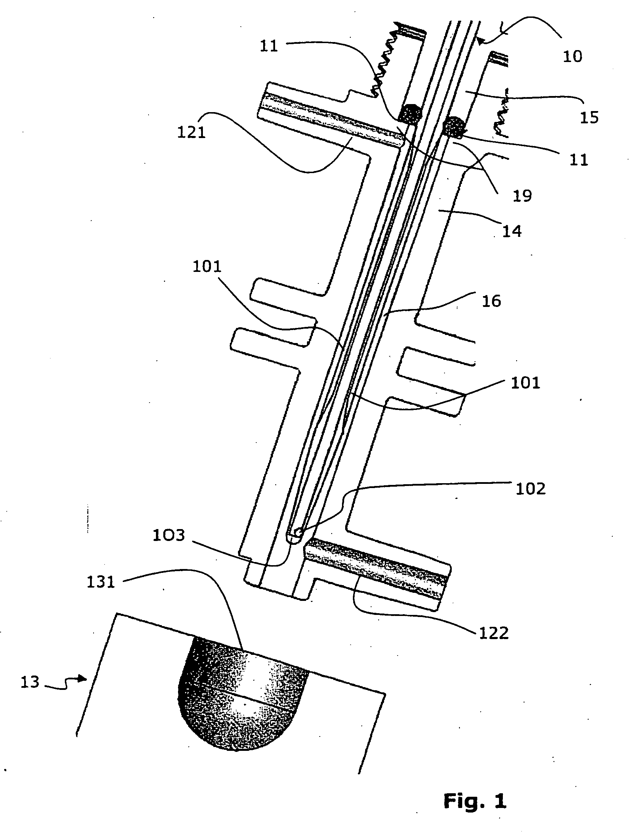

La figure 1, est une représentation schématique en coupe d'un dispositif de prélèvement selon l'invention comportant un corps 14, une aiguille 10, des moyens d'étanchéité 11, et des moyens 121 et 122 d'amenée et d'évacuation d'un liquide dans le volume intérieur du corps 14 du dispositif. L'aiguille de prélèvement 10 est munie d'une extrémité de prélèvement 103. Sur la figure 1 est partiellement représenté un tube 13 comportant un bouchon 131. Sur cette figure, l'aiguille de prélèvement se trouve dans une position rétractée, c'est-à-dire que l'extrémité de prélèvement 103 est disposée à l'intérieur du corps 14.

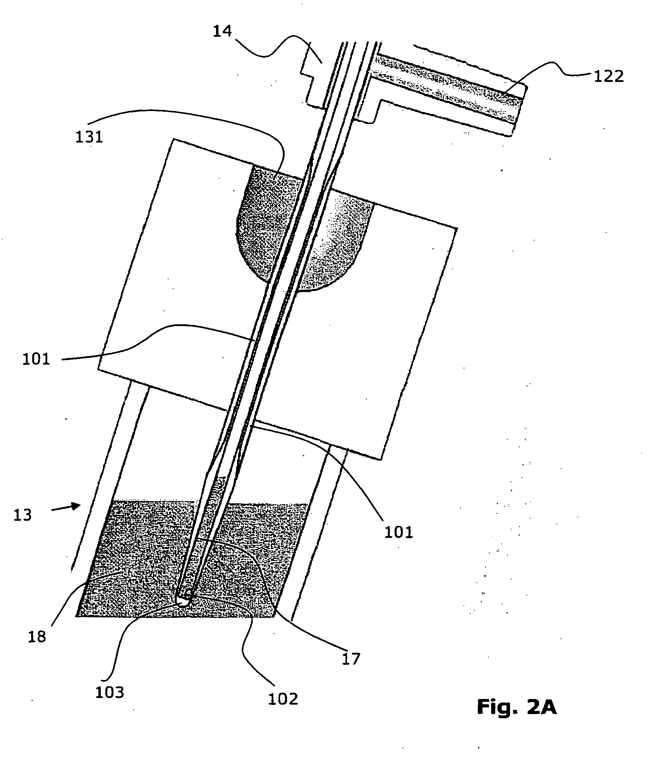

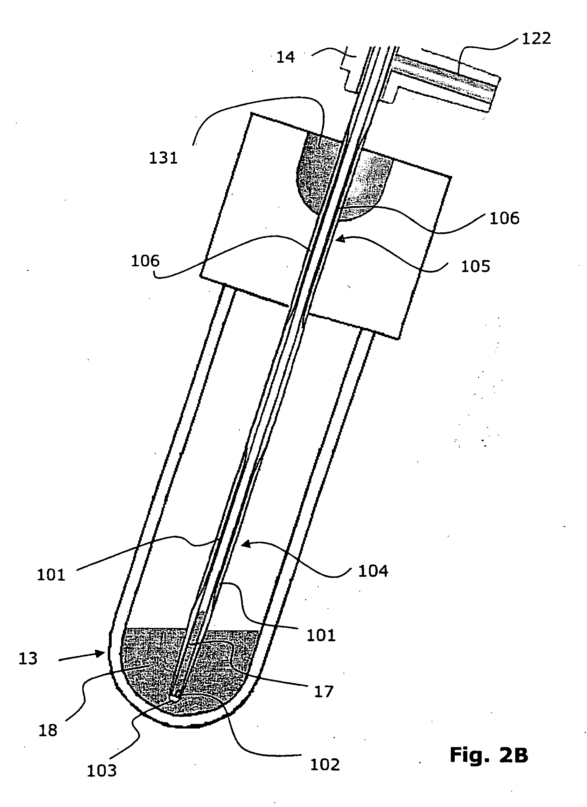

Cette aiguille 10 comporte en outre deux rainures 101 sur sa surface extérieure et un orifice 102. Les rainures 101 se trouvent entre les moyens d'étanchéité 11 et l'extrémité de prélèvement 103 de l'aiguille 10. En effet, les rainures 101 ne s'étendent pas sur toute la longueur de l'aiguille et ne sont présentes que sur une partie limitée de l'aiguille 10. Cette partie limitée se situe entre l'extrémité de prélèvement 103 et les moyens d'étanchéité 11 quelle que soit la position de l'aiguille entre la position rétractée représentée sur cette figure 1 et la position étendue permettant d'effectuer un prélèvement d'un échantillon destiné à être analysé (voir fig. 2A et 2B). Les rainures 101 se trouvent donc au-delà des moyens d'étanchéité dans la direction de l'extrémité de prélèvement 103.

Les moyens d'étanchéité 11 sont placés dans un volume intérieur du corps 14 du dispositif selon l'invention. Ils permettent de diviser le volume intérieur du corps 14 en deux parties :
- une partie 16, dite aval, correspondant à la partie du volume intérieur du corps 14 située au-delà des moyens d'étanchéité 11 en direction de l'extrémité de prélèvement 103 de l'aiguille 10 et,
- une partie 15, dite amont, correspondant au reste du volume intérieur du corps 14.

Les moyens d'étanchéité 11 ont pour fonction de réaliser l'étanchéité entre la partie aval 16 et la partie amont 15. Ils sont agencés de manière à être en contact, d'une part avec la surface extérieure de l'aiguille 10, et d'autre part avec une surface intérieure du corps 14 du dispositif. Le contact entre les moyens d'étanchéité 11 et l'aiguille 10 est ajusté de manière à ce que l'aiguille 10 puisse y coulisser.

Dans l'exemple particulier décrit ici, les moyens d'étanchéité sont un joint torique. Le joint torique prend appui sur un épaulement 19 du corps 14 du dispositif.

Le dispositif comprend en outre un circuit 122 d'amenée et un circuit 121 d'évacuation d'un liquide déterminé dans la partie aval 16. Le dispositif peut en outre comprendre des moyens de poussée ou d'aspiration (non représentés) d'un produit dans les circuits d'amenée et/ou d'évacuation, tels que des pompes et des vannes. Ces moyens peuvent en outre comprendre des moyens d'obturation du circuit d'amenée 122 et/ou du circuit d'évacuation 121 quand ils ne sont pas utilisés. Bien entendu, dans un autre mode de réalisation, le circuit 121 peut servir de circuit d'amenée d'un liquide dans la partie aval et le circuit 122 de circuit d'évacuation de ce liquide.

Le liquide amené dans la partie aval 16 peut être sous pression. Il peut comprendre un produit nettoyant ou un produit de dilution. Dans le cas où le liquide amené par le circuit d'amené 122 est un produit de nettoyage le dispositif est placé au dessus d'un bac (non représenté) de réception prévu pour recevoir tout ou partie du produit de nettoyage. Le produit de nettoyage peut aussi être évacué par le circuit d'évacuation 121 en créant une dépression au niveau de la partie aval 16 du volume intérieur du corps. Dans le cas où le liquide amené par le circuit d'amenée 122 est un produit diluant le dispositif est placé au dessus d'un réceptacle (non représenté) destiné à recevoir le produit en question. Les moyens d'étanchéité 11 ont pour fonction d'assurer l'étanchéité de la partie amont 15 du volume intérieur du corps 14 du dispositif face aux produits amenés par les moyens d'amenée 122 dans la partie aval.

Sur la figure 2A, le dispositif selon l'invention est représenté avec l'aiguille 10 de prélèvement dans une position étendue. Plus précisément, l'aiguille 10 est représentée après perforation du bouchon 131 du tube 13 par l'aiguille 10. Lors de la perforation du bouchon 131 du tube 13, l'intérieur du tube 13 est mis à la pression atmosphérique par circulation d'air au travers des rainures 101.

L'aiguille 10 comporte en outre un orifice 102 de prélèvement sur la paroi latérale de l'extrémité 103 de prélèvement et proche de la pointe de cette extrémité 103. La disposition de cet orifice 102 permet, d'une part d'éviter de découper une pièce dans le bouchon 131 du tube 13 lors de la perforation de ce bouchon et d'obturer l'orifice 102 avec la pièce en question, et d'autre part d'effectuer un prélèvement d'un échantillon 17 du produit à analyser 18 avec une grande précision quant à la quantité prélevée dans l'aiguille 10.

Les rainures 101 se terminent à distance de l'extrémité de prélèvement 103. Cette distance peut être fonction de la forme de l'extrémité de prélèvement 103 ainsi que des dimensions de l'extrémité 103 et de manière à ce que l'extrémité de prélèvement 103 soit assez résistante pour passer traverser sans dommage le bouchon 131 du tube 13 contenant le produit 18 à analyser. La contrainte exercée sur l'aiguille 10 lors du percement du bouchon ne doit pas abîmer l'aiguille 10.

La figure 2B est une représentation schématique en coupe d'un dispositif selon l'invention. Sur la figure 2B, l'aiguille 10 de prélèvement est dans une position de prélèvement. L'extrémité de prélèvement 103 de l'aiguille 10 se trouve au voisinage du fond du tube 13 contenant le produit à prélever 18. L'aiguille 10 comporte deux zones rainurées .104 et 105. La première zone rainurée 104 permet une mise à la pression atmosphérique de l'intérieur du tube 13 lors du percement du bouchon 131 du tube 13 par l'aiguille 10. La seconde zone rainurée 105, comportant les rainures 106, traverse le bouchon du tube 13 pour permettre une circulation d'air entre l'intérieur et l'extérieur du tube 13 de manière à éviter les dépressions créées par le prélèvement d'une quantité importante de produit 18. Quand l'aiguille 10 est dans sa position rétractée, les moyens d'étanchéité sont disposés entre la première zone rainurée 104 et la deuxième zone rainurée 105.

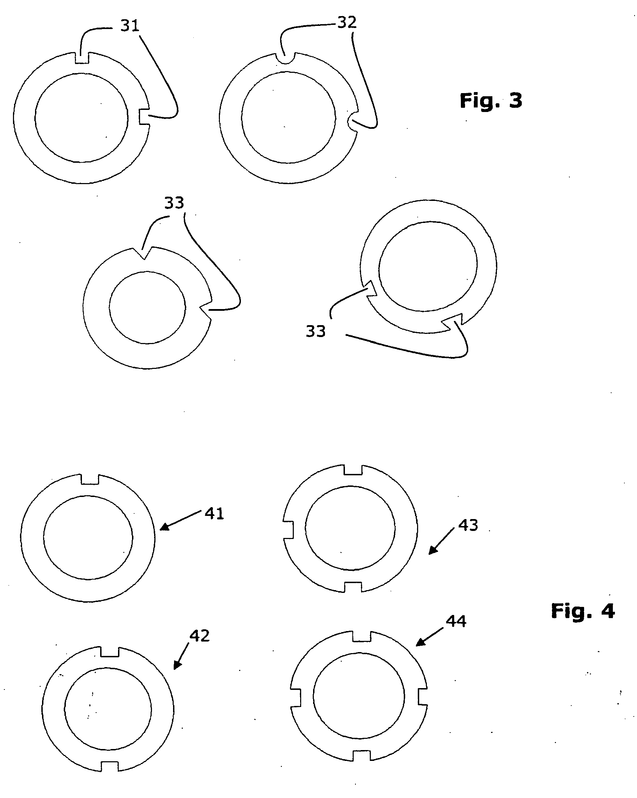

Telle que représentée en figure 3, l'aiguille 10 peut comporter des rainures 31 de section carrée ou rectangulaire, des rainures 32 de section circulaire, des rainures 33 de section triangulaire, et/ou des rainures 34 de section trapézoïdale et plus particulièrement en queue d'aronde. Chacune de ces sections a des effets techniques particuliers. Par exemple, une section arrondie facilite le nettoyage de l'aiguille et plus particulièrement des rainures, alors qu'une section carrée ou rectangulaire ou encore trapézoïdale permet une mise à la pression atmosphérique plus efficace de l'intérieur du tube 13.

La figure 4 est une représentation schématique d'une aiguille 41 comportant une seule rainure. Toujours sur la figure 4, il est représenté une aiguille 42 comportant 2 rainures, une aiguille 43 comportant 3 rainures et une aiguille 44 comportant 4 rainures.

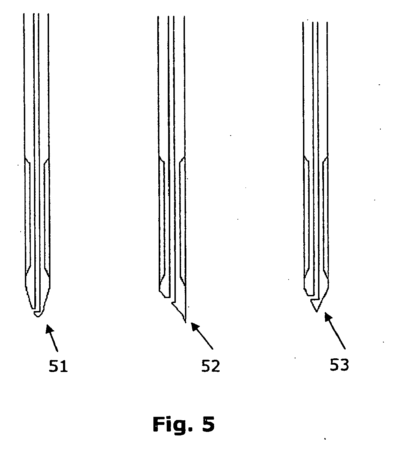

Par ailleurs, l'extrémité de prélèvement 103 de l'aiguille 10 peut présenter une forme arrondie 51 telle que représentée en figure 5. Une telle extrémité arrondie 51 permet de réduire les risques de blessure, et pus particulièrement les risques de piqûre, d'un opérateur avec l'aiguille lorsqu'il est amené à la manipuler.

Cependant, dans une version particulière du dispositif selon l'invention, l'extrémité de l'aiguille peut avoir une forme pointue 52 et 53. Plus particulièrement, l'aiguille peut présenter une extrémité de prélèvement avec une arête tranchante, cette arête tranchante étant reliée au corps sensiblement cylindrique de l'aiguille par au moins un ou plusieurs plans, au moins un de ces plans présentant un orifice de prélèvement.

Bien entendu, le dispositif selon l'invention n'est pas limité à l'exemple que l'on vient de décrire. Le nombre, la disposition, et la forme des rainures de l'aiguille peuvent varier. L'aiguille peut comporter une extrémité de prélèvement de section différente de celles que l'on a évoquées dans le cadre de la description de l'exemple particulier ci-dessus. L'aiguille de prélèvement peut être mise en déplacement circulaire. Les moyens d'étanchéité peuvent être fixés au moyen d'une gorge ou de plusieurs épaulements. Enfin l'aiguille de prélèvement peut comporter plusieurs orifices dé prélèvement.

## Revendications

1. Dispositif de prélèvement utilisable dans un automate d'analyse, ledit dispositif comprenant :
- un corps (14),
- une aiguille de prélèvement (10) mobile dans le corps (14) entre une position étendue adaptée au prélèvement d'un échantillon (17) et une position rétractée, ladite aiguille (10) comprenant une extrémité de prélèvement (103) et au moins une rainure (101) s'étendant longitudinalement sur sa surface extérieure, et
- des moyens d'étanchéité (11) entre le corps (14) et ladite surface extérieure de l'aiguille (10) ;
ladite rainure (101) s'étendant entre lesdits moyens d'étanchéité (11) et ladite extrémité de prélèvement (103) quelle que soit la position de ladite aiguille (10) entre sa position étendue et sa position rétractée.

2. Dispositif selon la revendication 1, **caractérisé en ce que** l'aiguille (10) comprend au moins une deuxième rainure (106) disposée de sorte que dans la position rétractée les moyens d'étanchéité sont disposés entre lesdites première et deuxième rainures.

3. Dispositif selon la revendication 2, **caractérisé en ce que** l'aiguille comprend plusieurs zones rainurées séparées entre elles par des zones d'étanchéité respectives.

4. Dispositif selon l'une quelconque des revendications précédentes, **caractérisé en ce que** les moyens d'étanchéité (11) prennent appui sur au moins un épaulement (19) du corps (14).

5. Dispositif selon l'une quelconque des revendications précédentes, **caractérisé en ce que** les moyens d'étanchéité (11) comprennent au moins un joint torique.

6. Dispositif selon l'une quelconque des revendications précédentes, **caractérisé en ce qu'**il comprend en outre des moyens (122) d'amenée et/ou des moyens (121) d'évacuation d'un liquide dans un volume intérieur du corps (14) situé du côté de l'extrémité (103) de prélèvement de l'aiguille (10) relativement aux moyens d'étanchéité (11).

7. Dispositif selon la revendication 6, **caractérisé en ce que** le liquide comprend un liquide sous pression.

8. Dispositif selon la revendication 6 ou 7, **caractérisé en ce que** le liquide comprend un produit nettoyant et/ou de rinçage.

9. Dispositif selon la revendication 6 ou 7, **caractérisé en ce que** le liquide comprend un produit de dilution.

10. Dispositif selon l'une quelconque des revendications précédentes, **caractérisé en ce que** du côté de l'extrémité (103) de prélèvement de l'aiguille (10), la rainure (101) se termine à distance de ladite extrémité (103).

11. Dispositif selon l'une quelconque des revendications précédentes, **caractérisé en ce que** la rainure (101) présente une section rectangulaire (31).

12. Dispositif selon l'une quelconque des revendications 1 à 10, **caractérisé en ce que** la rainure (101) présente une section triangulaire (33).

13. Dispositif selon l'une quelconque des revendications 1 à 10, **caractérisé en ce que** la rainure (101) présente une section arrondie (32).

14. Dispositif selon l'une quelconque des revendications 1 à 10, **caractérisé en ce que** la rainure (101) présente une section trapézoïdale (34).

15. Dispositif selon l'une quelconque des revendications précédentes, **caractérisé en ce que** l'extrémité de prélèvement (103) de l'aiguille (10) est arrondie.

16. Dispositif selon l'une quelconque des revendications précédentes, **caractérisé en ce que** l'extrémité de prélèvement (103) de l'aiguille (10) comporte au moins un orifice (102), débouchant latéralement à la surface de l'aiguille (10).

17. Procédé d'analyse d'un échantillon, notamment un échantillon sanguin, mettant en oeuvre le dispositif selon l'une quelconque des revendications précédentes.

## Claims

1. Sampling device which can be used in an analysis automated device, said device comprising:
- a body (14),
- a sampling needle (10) that can move in the body (14) between an extended position suitable for taking a sample (17) and a retracted position, said needle (10) having a sampling end (103) and at least one groove (101) extending longitudinally over its outside surface, and
- sealing means (11) between the body (14) and said outside surface of the needle (10);
said groove (101) extending between said sealing means (11) and said sampling end (103) regardless of the position of said needle (10) between its extended position and its retracted position.

2. Device according to claim 1, **characterized in that** the needle (10) comprises at least one second groove (106) arranged such that in the retracted position the sealing means are arranged between said first and second grooves.

3. Device according to claim 2, **characterized in that** the needle comprises several grooved zones separated from each other by respective sealing zones.

4. Device according to any one of the previous claims, **characterized in that** the sealing means (11) rest on at least one shoulder (19) of the body (14).

5. Device according to any one of the previous claims, **characterized in that** the sealing means (11) comprise at least one O-ring.

6. Device according to any one of the previous claims, **characterized in that** it further comprises means (122) for feeding and/or means (121) for removing a liquid in an internal volume of the body (14) situated on the side of the sampling end (103) of the needle (10) relative to the sealing means (11).

7. Device according to claim 6, **characterized in that** the liquid comprises a liquid under pressure.

8. Device according to any one of claims 6 or 7, **characterized in that** the liquid comprises a cleaning and/or rinsing product.

9. Device according to any one of the claims 6 or 7, **characterized in that** the liquid comprises a dilution product.

10. Device according to any one of the previous claims, **characterized in that** on the side of the sampling end (103) of the needle (10), the groove (101) ends at a distance from said end (103).

11. Device according to any one of the previous claims, **characterized in that** the groove (101) has a rectangular section (31).

12. Device according to any one of claims 1 to 10, **characterized in that** the groove (101) has a triangular section (33).

13. Device according to any one of claims 1 to 10, **characterized in that** the groove (101) has a rounded section (32).

14. Device according to any one of claims 1 to 10, **characterized in that** the groove (101) has a trapezoidal section (34).

15. Device according to any one of the previous claims, **characterized in that** the sampling end (103) of the needle (10) is rounded.

16. Device according to any one of the previous claims, **characterized in that** the sampling end (103) of the needle (10) has at least one hole (102) opening out laterally on the surface of the needle (10).

17. Method for analyzing a sample, in particular a blood sample, using the device of any one of the previous claims.

## Patentansprüche

1. Probennahmenvorrichtung, die in einem Analyseautomaten verwendbar ist, wobei die Vorrichtung umfasst:
- einen Körper (14),
- eine Probennahmenadel (10), die in dem Körper (14) zwischen einer ausgefahrenen Position, die für die Entnahme einer Probe (17) geeignet ist, und einer eingefahrenen Position beweglich ist, wobei die Nadel (10) ein Probennahmeende (103) und wenigstens eine Nut (101) aufweist, die sich in Längsrichtung an ihrer Außenseite erstreckt, und
- Dichtungsmittel (11) zwischen dem Körper (14) und der Außenseite der Nadel (10);
wobei sich die Nut (101) unabhängig von der Position der Nadel (10) zwischen ihrer ausgefahrenen Position und ihrer eingefahrenen Position zwischen den Dichtungsmitteln (11) und dem Probennahmeende (103) erstreckt.

2. Vorrichtung nach Anspruch 1, **dadurch gekennzeichnet, dass** die Nadel (10) wenigstens eine zweite Nut (106) aufweist, die in der Weise angeordnet ist, dass in der eingefahrenen Position die Dichtungsmittel zwischen der ersten und der zweiten Nut angeordnet sind.

3. Vorrichtung nach Anspruch 2, **dadurch gekennzeichnet, dass** die Nadel mehrere mit Nuten versehene Zonen aufweist, die voneinander durch jeweilige Dichtungszonen getrennt sind.

4. Vorrichtung nach einem der vorhergehenden Ansprüche, **dadurch gekennzeichnet, dass** die Dichtungsmittel (11) sich an wenigstens einer Schulter (19) des Körpers (14) abstützen.

5. Vorrichtung nach einem der vorhergehenden Ansprüche, **dadurch gekennzeichnet, dass** die Dichtungsmittel (11) wenigstens einen O-Ring umfassen.

6. Vorrichtung nach einem der vorhergehenden Ansprüche, **dadurch gekennzeichnet, dass** sie außerdem Mittel (122) zur Zuleitung und/oder Mittel (121) zur Ableitung einer Flüssigkeit in ein bzw. aus einem Innenraum des Körpers (14) aufweist, der sich auf Seiten des Probennahmeendes (103) der Nadel (10) relativ zu den Dichtungsmitteln (11) befindet.

7. Vorrichtung nach Anspruch 6, **dadurch gekennzeichnet, dass** die Flüssigkeit eine mit Druck beaufschlagte Flüssigkeit umfasst.

8. Vorrichtung nach Anspruch 6 oder 7, **dadurch gekennzeichnet, dass** die Flüssigkeit ein Reinigungs- und/oder Spülmittel umfasst.

9. Vorrichtung nach Anspruch 6 oder 7, **dadurch gekennzeichnet, dass** die Flüssigkeit ein Lösungsmittel umfasst.

10. Vorrichtung nach einem der vorhergehenden Ansprüche, **dadurch gekennzeichnet, dass** die Nut (101) auf Seiten des Probennahmeendes (103) der Nadel (10) in einem Abstand von dem Probennahmeende (103) aufhört.

11. Vorrichtung nach einem der vorhergehenden Ansprüche, **dadurch gekennzeichnet, dass** die Nut (101) einen rechteckigen Querschnitt (31) aufweist.

12. Vorrichtung nach einem der Ansprüche 1 bis 10, **dadurch gekennzeichnet, dass** die Nut (101) einen dreieckigen Querschnitt (33) aufweist.

13. Vorrichtung nach einem der Ansprüche 1 bis 10, **dadurch gekennzeichnet, dass** die Nut (101) einen abgerundeten Querschnitt (32) aufweist.

14. Vorrichtung nach einem der Ansprüche 1 bis 10, **dadurch gekennzeichnet, dass** die Nut (101) einen trapezförmigen Querschnitt (34) aufweist.

15. Vorrichtung nach einem der vorhergehenden Ansprüche, **dadurch gekennzeichnet, dass** das Probennahmeende (103) der Nadel (10) abgerundet ist.

16. Vorrichtung nach einem der vorhergehenden Ansprüche, **dadurch gekennzeichnet, dass** das Probennahmeende (103) der Nadel (10) wenigstens eine Öffnung (102) aufweist, die seitlich zur Oberfläche der Nadel (10) mündet.

17. Verfahren zum Analysieren einer Probe, insbesondere einer Blutprobe, unter Verwendung der Vorrichtung nach einem der vorhergehenden Ansprüche.
